# EUROPÄISCHE PATENTANMELDUNG

(11) **EP 2 088 349 A1**
(43) Veröffentlichungstag der Anmeldung: **12.08.2009**
(21) Anmeldenummer: 08101464.9
(22) Anmeldetag: 11.02.2008
(51) Int. Cl.: F16F 15/32

(54) **Verfahren zur Herstellung eines Gewichtskörpers für ein Auswuchtgewicht sowie entsprechender Gewichtskörper**

(71) Anmelder: Franken-Industrie GmbH & Co. KG, 97209 Veitshöchheim (DE)
(72) Erfinder: Kunz, Herwig, 97209 Veitshöchheim (DE); Wagenschein, Dietmar, 97209 Veitshöchheim (DE)
(74) Vertreter: Götz, Georg Alois

(57) **Zusammenfassung**

Verfahren zu Herstellung eines Gewichtskörpers (2,7,11) für ein Auswuchtgewicht (1), wobei der Gewichtskörper (2,7,11) durch Abschneiden eines Streifens einer für den Gewichtskörper (2,7,11) gewünschten Länge von einem längeren Blechstreifen, der, zumindest im Wesentlichen, bereits die für den Gewichtskörper (2,7,11) vorgesehene Breite aufweist, hergestellt wird.

## Beschreibung

Die Erfindung betrifft ein Verfahren zur Herstellung eines Gewichtskörpers für ein Auswuchtgewicht sowie einen entsprechenden Gewichtskörper.

Auswuchtgewichte, die dazu verwendet werden, beispielsweise Kraftfahrzeugräder bzw. Felgen auszuwuchten, bestehen in aller Regel aus einem Gewichtskörper sowie einem zugehörigen Befestigungselement wie einer Klammer, wobei das Befestigungselement dazu dient, den Gewichtskörper am auszuwuchtenden Gegenstand anzuordnen bzw. zu haltern. Die Gewichtskörper für derartige Auswuchtgewichte werden bisher dadurch hergestellt, dass aus einem massiven Körper, in der Regel aus Stahl, ein Bereich geeigneter Größe ausgestanzt wird. Beim Stanzen lässt sich jedoch nicht vermeiden, dass ein gewisser Materialabfall entsteht, der nicht zuletzt die Kosten für Auswuchtgewichte erhöht. Weiterhin ist für Gewichte unterschiedlicher Größen, also beispielsweise für ein Gewicht mit 10 g, für ein Gewicht mit 15 g sowie für ein Gewicht mit 20 g, immer jeweils ein eigenständiges bzw. separates Stanzwerkzeug zum Ausstanzen des Gewichtskörpers erforderlich. Die Werkzeuge, die benötigt werden, um diese Stanzverfahren durchzuführen, sind zudem recht komplex, so dass qualifiziertes Fachpersonal erforderlich ist, um die Werkzeuge gegebenenfalls zu reparieren oder auch nur zu bedienen bzw. um fehlerhafte Teile auszutauschen.

Der Erfindung liegt damit die Aufgabe zu Grunde, ein diesbezüglich verbessertes Verfahren zur Herstellung eines Gewichtskörpers bzw. einen entsprechend verbesserten Gewichtskörper anzugeben.

Zur Lösung dieser Aufgabe ist erfindungsgemäß ein Verfahren zur Herstellung eines Gewichtskörpers für ein Auswuchtgewicht vorgesehen, das sich dadurch auszeichnet, dass der Gewichtskörper durch Abschneiden eines Streifens einer für den Gewichtskörper gewünschten Länge von einem längeren Blechstreifen, der, zumindest im Wesentlichen, bereits die für den Gewichtskörper vorgesehene Breite aufweist, hergestellt wird.

Erfindungsgemäß wird also nicht wie bisher üblich der Gewichtskörper aus einem Blech ausgestanzt, sondern der Gewichtskörper entsteht durch Ablängen eines Streifens bzw. eines Stücks in geeigneter Länge von einem längeren Band bzw. Streifen. Dabei ist es zweckmäßig, wenn das längere Band bzw. der längere Streifen bereits die für den Gewichtskörper vorgesehene richtige Breite aufweist. Wenn das längere Band, von dem der Gewichtskörper abgelängt wird, bereits exakt die benötigte Breite aufweist, ist lediglich das Abschneiden am Ende, also entlang einer schmalen bzw. kurzen Kante, erforderlich, damit der Gewichtskörper in der richtigen Größe vorliegt. Dies bedeutet, dass die Materialausnutzung beim erfindungsgemäßen Verfahren wesentlich besser ist als bei den bisher bekannten Stanzverfahren, da der längere Streifen idealerweise bereits genau die Breite hat, die für den Gewichtskörper benötigt wird, und weitere Verarbeitungsvorgänge bezüglich der Längskanten nicht erforderlich sind. Lediglich am Ende ist ein Abstanzen bzw. Ablängen erforderlich, bei dem, zum Beispiel im Rahmen einer Nachbearbeitung, gegebenenfalls ein geringer Materialabfall entstehen kann. Der Begriff "Blech" ist im Kontext der Erfindung in einem weiten Sinne als für die Herstellung von Gewichtskörpern geeignetes Ausgangsmaterial zu verstehen.

Selbstverständlich ist es im Rahmen der Erfindung grundsätzlich auch denkbar, dass nicht an der kurzen Seite abgeschnitten wird, sondern an der langen Seite, also von einem längeren Band, dass die für den Gewichtskörper vorgesehene Länge als eigene Breite aufweist. Dies ist aber eher dann interessant, wenn die Breite und die Länge des Gewichtskörpers in ähnlichen Bereichen liegen, da es grundsätzlich von Vorteil ist, wenn die Schnittkante nur eine vergleichsweise kurze Kante ist. Selbstverständlich kann der Schnitt in Querrichtung, falls dies gewünscht ist, auch mehr oder weniger schräg erfolgen. Der Gewichtskörper muss also nicht zwingend eine quaderartige Grundform aufweisen.

Dies führt dazu, dass der Gewichtskörper im Vergleich zu bisherigen Verfahren preiswert hergestellt werden kann und zudem zur Herstellung lediglich ein Schneidewerkzeug erforderlich ist, wobei über das Einstellen eines geeigneten Vorschubs für den Blechstreifen oder das Band, von dem abgeschnitten werden soll, bzw. durch eine geeignete Taktung des Schneidevorgangs bei einem automatischen Vorschub Gewichtskörper unterschiedlicher Längen und dementsprechend mit unterschiedlichen Massen bzw. Gewichtsverhältnissen hergestellt werden können, ohne dass jeweils separate Werkzeug erforderlich wären. Das einmal eingesetzte Schneidewerkzeug kann somit zur Herstellung unterschiedlichster Gewichtskörper verwendet werden.

Damit wird erfindungsgemäß der Gewichtskörper für das Auswuchtgewicht bzw. gegebenenfalls auch für andere Anwendungen mittels eines relativ einfachen Werkzeugs, mit dem Gewichtskörper unterschiedlicher Gewichtsklassen hergestellt werden können, aus einem längeren Streifen durch Abschneiden hergestellt. Das Schneidewerkzeug bietet außerdem den Vorteil, dass es einfach zu bedienen und zu warten ist.

Erfindungsgemäß kann der Streifen von einem aufgewickelten Metallband als längerem Blechstreifen abgeschnitten werden, insbesondere von einem Coil und/oder einem Endlosband. Das Band, von dem abgeschnitten wird, liegt also ursprünglich zum Beispiel auf einer Rolle aufgewickelt vor und wird dann zum Abschneiden der Gewichtskörper abgewickelt.

Der Vorteil bei der Verwendung solcher aufgewickelter Metallbänder ist, dass diese Blechstreifen bereits fertig konfektioniert bezogen werden können, beispielsweise als Coils, auf denen eine bestimmte Länge des Metallbandes aufgewickelt ist , beispielsweise eines Stahlbandes, wobei statt der Länge meist die Masse angegeben ist. Derartige Coils werden oft nach ihrem Gewicht in Tonnen verkauft. Damit kann beim erfindungsgemäßen Verfahren auf ein Ausgangsmaterial zurückgegriffen werden, das in dieser Form aufgrund seiner weiten Verwendung einfach zu erhalten ist. Von den aufgewickelten Rollen, beispielsweise Bandstahlrollen, wird dann beim Abrollvorgang einfach ein Gewichtskörper der gewünschten Länge abgeschnitten und später mit einem Befestigungselement versehen, um so schließlich das fertige Auswuchtgewicht zu erhalten.

Der Streifen kann von einem Stahlstreifen, insbesondere aus ungehärtetem Stahl, abgeschnitten werden. In diesem Fall wird als längerer Blechstreifen ein Stahlstreifen, bei dem es sich in der Regel um ungehärteten Stahl handeln wird, herangezogen, beispielsweise in der Form eines Stahlbandcoils. Selbstverständlich können alternativ auch andere Materialien als Stahl zum Einsatz kommen, unter anderem abhängig vom Anwendungsbereich, der für den Gewichtskörper bzw. das fertige Auswuchtgewicht vorgesehen ist.

Nach dem Abschneiden bzw. Ablängen kann der Streifen durch wenigstens einen Biegevorgang in eine gewünschte Form gebracht werden. Es ist also möglich, dass der abgeschnittene Streifen in einen bestimmten Radius gebogen wird, der für den Gewichtskörper vorgesehen ist, um beispielsweise die Anbringung an einem Fahrzeugrad zu erleichtern bzw. um die Befestigung eines Befestigungselements wie einer Feder bzw. einer Klammer optimal zu ermöglichen. Hierfür können gegebenenfalls auch Biegungen entlang mehrerer unterschiedlicher Achsen bzw. andere Verformungen vorgenommen werden. Der abgeschnittene bzw. abgelängte Blechstreifen kann also beispielsweise entlang seiner Längsrichtung, etwa mittig, eingebogen werden, beispielsweise derart, dass ein Öffnungswinkel zwischen 90 und 135 Grad, gegebenenfalls auch ein hiervon abweichender Winkel, entsteht. Die Biegung muss wie erwähnt nicht auf eine Richtung beschränkt sein, das heißt, dass der Streifen gegebenenfalls entlang seiner Längsachse gebogen werden kann, aber ergänzend oder alternativ ebenso entlang einer Quer- und/oder Schrägachse bzw. derart, dass die langen Seiten des Gewichtskörpers in ihrer äußeren Form an einen Radius eines auszuwuchtenden Rades oder dergleichen angepasst werden.

Dementsprechend kann ein Biegevorgang beispielsweise, zumindest im Wesentlichen, bezüglich einer Längsrichtung des Streifens durchgeführt werden, so dass der Streifen zum Beispiel entlang seiner Mittelachse in Längsrichtung gebogen wird und/oder ein wenig entlang einer Längskante in der Ebene des Streifens so eingebogen wird, dass er sich einem Radius eines auszuwuchtenden Gegenstands anpasst. Selbstverständlich sind, wie bereits erwähnt wurde, ebenso andere Biegungen bzw. Verarbeitungsschritte zur Anpassung der Form des abgeschnittenen Streifens möglich.

Der Streifen kann von einem Spaltband oder Walzblech als längerem Blechstreifen abgeschnitten werden. Beispielsweise kann wie erwähnt als Ausgangsmaterial ein auf einem Coil aufgewickeltes Material verwendet werden. Breitere Coils werden vor der Verarbeitung oft abgewickelt und gespalten. Es erfolgt dann also ein Spaltvorgang eines breiteren Coilmaterials in eine Mehrzahl kleinerer Bänder, die wiederum einzeln aufgewickelt werden. In diesem Fall wäre das Ausgangsmaterial, das zur Herstellung des erfindungsgemäßen Gewichtskörpers verwendet werden kann, ein Spaltband.

Ebenso ist es möglich, dass ein Band zum Beispiel aus Stahl, von dem der Streifen für den Gewichtskörper abgeschnitten wird, aus einem Draht hergestellt ist, der durch Walzen in eine bestimmte Breite und Dicke gewalzt worden ist. Hierbei werden meist mehrere Walzvorgänge durchgeführt, bis die gewünschte Breite und Dicke erreicht ist. Anschließend erfolgt ein Aufwickeln des fertigen Bandes. Bei diesem Walzvorgang entstehen abgerundete Walzkanten anstatt der ansonsten bei Schneidvorgängen erhaltenen scharfkantigen Schnittkanten.

Dementsprechend kann der Streifen von einem Walzblech als längerem Blechstreifen abgeschnitten werden, das wenigstens eine Naturwalzkante aufweist. Derartige Naturwalzkanten, die durch die geschilderten Walzvorgänge entstehen, sind abgerundet, also nicht mehr scharfkantig wie Schnittkanten, und weisen somit für die Weiterverarbeitung und Verwendung der Gewichtskörper vorteilhafterweise ein geringeres Verletzungsrisiko auf. Meist sind die Naturwalzkanten, zumindest im Wesentlichen, oft mit einer leichten mittigen Abflachung, halbkreisförmig ausgebildet.

Bei Vorliegen einer Naturwalzkante kann das Material in der Form, in der es nach dem Walzen vorliegt, verwendet werden, um den Gewichtskörper zu bilden, ohne dass weitere Verarbeitungsschritte erforderlich wären. Es ist also keine Nachbearbeitung nötig, um die Kante des Gewichtskörpers in eine bestimmte Geometrie zu bringen bzw. das Verletzungsrisiko zu vermindern. Dementsprechend ist das Verwenden der Naturwalzkante, die bei einem Abschneiden des Gewichtskörpers von einem längeren gewalzten Band an den beiden Längskanten vorliegen würde, eine vergleichsweise einfache und preiswerte Methode zur Erzeugung des gewünschten Gewichtskörpers. Gegebenenfalls kann die Naturwalzkante wie erwähnt, beispielsweise durch entsprechende Führungs- bzw. Spurverfahren, eine leichte Abflachung aufweisen, die aber in der Regel für die Funktion und hinsichtlich des Verletzungsrisikos unerheblich ist. Grundsätzlich sind Naturwalzkanten aber in der Regel halbkreisförmig ausgebildet. Da durch die Rundung das Verletzungsrisiko sehr gering ist, können ansonsten bei Schnittkanten oft durchgeführte Nachbearbeitungsvorgänge, beispielsweise ein Schleifen oder dergleichen, entfallen.

Insbesondere kann der Streifen von einem Walzblech als längerem Blechstreifen derart abgeschnitten werden, dass wenigstens eine Längskante des Gewichtskörpers durch wenigstens eine an einer langen Kante des Walzblechs vorhandene Naturwalzkante gebildet wird. In der Regel werden Walzbleche mit der für den Gewichtskörper gewünschten Breite gewählt, so dass nach dem Ablängen beide Längskanten durch entsprechende Naturwalzkanten des aufgewickelten Stahlbandes gebildet werden.

Darüber hinaus betrifft die Erfindung einen Gewichtskörper für ein Auswuchtgewicht, der sich dadurch auszeichnet, dass der Gewichtskörper durch Abschneiden eines Streifens einer für den Gewichtskörper gewünschten Länge von einem längeren Blechstreifen, der, zumindest im Wesentlichen, bereits die für den Gewichtskörper vorgesehene Breite aufweist, hergestellt ist.

Der erfindungsgemäße Gewichtskörper wird also, wie zum vorstehenden Verfahren bereits geschildert wurde, lediglich durch Abschneiden von bzw. Ablängen eines beispielsweise endlos langen Streifens passender Breite hergestellt, so dass bezüglich der Breite bzw. Querrichtung keine weiteren Verarbeitungsschritte erforderlich sind, also insbesondere auch kein seitlicher Abfall wie bei einem Ausstanzvorgang entsteht.

Damit ist es möglich, Gewichtskörper mit unterschiedlichen Längen und dementsprechend unterschiedlichen Gewichten bzw. Massen vergleichsweise einfach mit einem einfachen Werkzeug, nämlich einem Schneidwerkzeug, das leicht zu bedienen ist, und unter wenig Abfallentstehung herzustellen.

Zweckmäßigerweise weist folglich der längere Blechstreifen bereits genau die für den Gewichtskörper vorgesehene Breite auf. Gegebenenfalls können ergänzende Nachverarbeitungsschritte vorgesehen sein, beispielsweise ein leichtes Abschleifen oder dergleichen bzw. ein Nachschneiden, die aber grundsätzlich zu einem komplizierteren Herstellungsvorgang führen.

Der Streifen kann beispielsweise von einem aufgewickelten Metallband als längerem Blechstreifen abgeschnitten sein, insbesondere von einem Coil und/oder einem Endlosband. Der Gewichtskörper besteht also vorzugsweise aus einem Material, das als Rollenmaterial in einer fertig konfektionierten Form bezogen werden kann. Dies bietet die Möglichkeit, den Gewichtskörper besonders einfach und kostengünstig herzustellen.

Unter anderem kann der Streifen von einem Stahlstreifen, insbesondere aus ungehärtetem Stahl, abgeschnitten sein. Als Beispiel zu nennen sind hierfür Stahlbandcoils, die mit einem Gewicht bzw. einer Masse bis zu einigen Tonnen bezogen werden können.

In den abgeschnittenen Streifen, also den Gewichtskörper, kann wenigstens eine Biegung zum Erreichen einer gewünschten Form eingebracht sein. Der abgeschnittene Streifen kann, damit er als Gewichtskörper geeignet ist, mit Biegungen, unter anderem entlang mehrerer Kanten, bzw. einem Knick oder dergleichen versehen werden, damit seine äußere Form es ermöglicht, ihn zum Beipiel besonders einfach am auszuwuchtenden Gegenstand anzubringen, bzw. um die Befestigung der Feder oder eines anderen Befestigungselements zu erleichtern und/oder durch das Zusammenspiel von Feder und auszuwuchtendem Gegenstand eine sichere und zuverlässige Halterung des Gewichtskörpers zu ermöglichen.

Der Gewichtskörper in Form des abgeschnittenen Streifens kann, zumindest im Wesentlichen, bezüglich einer Längsrichtung gebogen sein. Es kann also beispielsweise entlang einer längs durch den Gewichtskörper verlaufenden Mittellinie eine Biegung eingebracht sein, deren Winkel für die Anbringung des Gewichtskörpers am auszuwuchtenden Gegenstand besonders geeignet ist. Daneben können selbstverständlich weitere Biegekanten vorhanden sein bzw. der Blechstreifen kann auf andere Art und Weise bezüglich seiner Form nachbearbeitet werden.

Der Streifen kann von einem Spaltband oder Walzblech als längerem Blechstreifen abgeschnitten sein. Es kann also beispielsweise ein aufgewickeltes Spaltband verwendet werden oder auch ein Walzblech, das unter Durchführung einer Reihe von Walzvorgängen in die gewünschte Form gebracht worden ist.

Insbesondere kann der Streifen von einem Walzblech als längerem Blechstreifen abgeschnitten sein, das wenigstens eine Naturwalzkante aufweist. Die Verwendung von derartigen Bändern mit Naturwalzkanten ist beispielsweise deshalb von Vorteil, weil diese im Wesentlichen runden Kanten das Verletzungsrisiko minimieren. Wird ein aufgewickeltes Naturwalzband verwendet, das bereits die für den Gewichtskörper vorgesehene Breite aufweist, so muss lediglich nach dem Abwickeln der gewünschten Länge in Querrichtung des Streifens abgeschnitten werden. Weitere Bearbeitungsschritte sind nicht erforderlich. Solche Naturwalzkanten sind bei auf herkömmliche Art ausgestanzten Gewichtskörpern nicht vorhanden und somit kennzeichnend für erfindungsgemäße Gewichtskörper.

Dementsprechend kann wenigstens eine Längskante, in der Regel beide Längskanten, des abgeschnittenen Gewichtskörpers durch wenigstens eine an einer langen Kante des Walzblechs vorhandene Naturwalzkante gebildet sein. In diesem Fall wird also preisgünstig beispielsweise ein Stahlbandcoil verwendet, das auf beiden Seiten in Längsrichtung Naturwalzkanten aufweist, die dementsprechend nach dem Ablängen auch an den Längsseiten des vom Coil abgeschnittenen Gewichtskörpers vorhanden sind.

Des Weiteren betrifft die Erfindung ein Auswuchtgewicht mit einem Gewichtskörper und einem Befestigungselement zum Befestigen des Auswuchtgewichts an einem auszuwuchtenden Gegenstand, das sich dadurch auszeichnet, dass der Gewichtskörper, der insbesondere ein Gewichtskörper wie vorstehend beschrieben ist, nach einem eingangs beschriebenen Verfahren hergestellt ist.

Für das Auswuchtgewicht, das aus einem Gewichtskörper sowie einem Befestigungselement wie einem Federelement oder einer Klammer besteht, wird dementsprechend ein Gewichtskörper verwendet, der durch Ablängen eines Streifens geeigneter Länge von einem längeren Band, beispielsweise einem als Coil aufgewickelten Stahlband, entstanden ist. Der abgeschnittene Streifen wird dann gegebenenfalls in eine gewünschte Form gebogen, wobei das Befestigungselement auf unterschiedliche Arten mit dem Gewichtskörper verbunden werden bzw. sein kann.

Insbesondere können der Gewichtskörper und das Befestigungselement durch einen Clinchvorgang miteinander verbunden sein. Es kann also ein Auswuchtgewicht verwendet werden, das zum einen durch Ablängen eines Gewichtskörpers geeigneter Länge von einem längeren Streifen entstanden ist, wobei zum anderen durch Clinchen die Befestigung der Klammer oder Feder bzw. eines anderen Befestigungselements am Gewichtskörper vorgenommen wird. Das Verwenden des Umformverfahrens des Clinchens hat den Vorteil, dass keine separaten dritten Teile, wie beispielsweise Nieten oder dergleichen, erforderlich sind, während gleichzeitig ein Korrosionsschutz zum Beispiel durch eine Zinkschicht im Unterschied beispielsweise zum Schweißen erhalten bleibt. Des weiteren ist Clinchen zur Verbindung des Gewichtskörpers mit dem Befestigungselement deswegen vorteilhaft, weil dieser Umformprozess gleichsam in einem Arbeitsgang, also durch einen Hubvorgang bzw. Eindrückvorgang eines entsprechenden Stempels, der hierzu in Richtung auf eine Matrize bewegt wird, durchgeführt werden kann.

Selbstverständlich ist es aber ebenso denkbar, dass die Verbindung zwischen dem Gewichtskörper und dem Befestigungselement auf andere Art und Weise hergestellt ist, beispielsweise durch einen Schweißvorgang, durch Verkleben oder dergleichen, bzw. dass die Befestigung auf mehrerlei Arten, beispielsweise durch ein Verkleben ergänzend zu einer Befestigung durch Clinchen oder dergleichen, realisiert wird.

Außerdem betrifft die Erfindung ein Werkzeug zur Herstellung eines Gewichtskörpers, insbesondere eines Gewichtskörpers wie vorstehend beschrieben, gemäß einem Verfahren der eingangs genannten Art. Bei diesem Werkzeug handelt es sich also im Wesentlichen um ein Schneidewerkzeug, das das Abschneiden eines Gewichtskörpers in geeigneter Länge von einem Streifen ermöglicht, der in der Regel bereits exakt die Breite aufweist, die für den Gewichtskörper vorgesehen ist. Mit diesem Werkzeug können Gewichtskörper unterschiedlicher Länge und somit mit sehr unterschiedlichen Gewichten bzw. Massen hergestellt werden, je nachdem, welches Gewicht für den auszuwuchtenden Gegenstand vorgesehen ist. Dieses Werkzeug bietet den Vorteil, dass es leicht zu bedienen ist und zudem, wie geschildert, als ein einheitliches Werkzeug die Herstellung unterschiedlichster Gewichtskörper bzw. Auswuchtgewichte ermöglicht.

Weitere Vorteile, Merkmale und Einzelheiten der Erfindung ergeben sich anhand der folgenden Ausführungsbeispiele sowie aus den Zeichnungen. Dabei zeigen:
- Figur 1: ein Auswuchtgewicht mit einem erfindungsgemäßen Gewichtskörper,
- Figur 2: eine Prinzipskizze einer Naturwalzkante eines nach einem erfindungsgemäßen Verfahren hergestellten Gewichtskörpers und
- Figur 3: eine Prinzipdarstellung einer erfindungsgemäßen Herstellung eines Gewichtskörpers für ein Auswuchtgewicht.

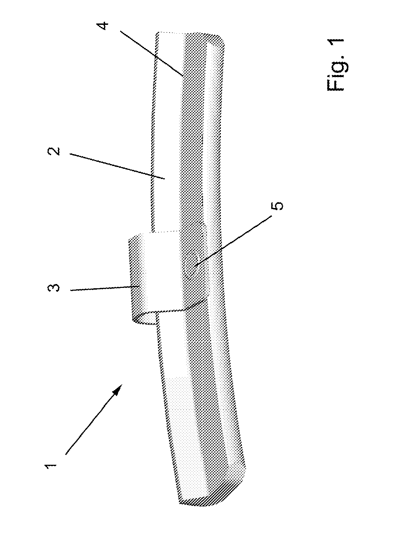

In der Figur 1 ist ein Auswuchtgewicht 1 mit einem erfindungsgemäßen Gewichtskörper 2 gezeigt. Das Auswuchtgewicht 1, das aus dem Gewichtskörper 2 sowie einem Befestigungselement 3, hier in Form einer Feder, besteht, weist einen Gewichtskörper 2 auf, der durch Abschneiden bzw. Ablängen von einem Stahlband größerer Länge, das die für den Gewichtskörper 2 vorgesehene Breite bereits genau aufweist, entstanden ist. Der Gewichtskörper 2 ist also dadurch hergestellt, das er von einem längeren Band bzw. einem längeren Streifen durch Abschneiden beim Abrollen dieses Streifens bzw. Bandes entstanden ist. Dies bedeutet, dass der Gewichtskörper 2, um als Gewichtskörper für das Auswuchtgewicht 1 verwendet werden zu können, lediglich mit der geeigneten Länge abgeschnitten wird, während die Längskanten direkt von den seitlichen Kanten des längeren Streifens bzw. Bandes gebildet werden.

Nach dem Ablängen bzw. Abschneiden ist der Gewichtskörper 2, wie hier zu erkennen ist, in eine für das Auswuchten des auszuwuchtenden Gegenstands besonders geeignete Form gebogen worden, insbesondere durch Vorsehen eines Knicks, der den Gewichtskörper im hier gezeigten Beispiel entlang seiner Mittellinie 4 in Längsrichtung durchzieht. Zudem wurde eine leichte Biegung an den Längskanten vorgenommen, um den Gewichtskörper 2 bzw. das Auswuchtgewicht 1 an den Umfangsbereich des auszuwuchtenden Rades anzupassen, der durch den Kreisradius des Rades bestimmt ist.

Bei anderen Ausführungsbeispielen ist selbstverständlich eine andere Biegung des Gewichtskörpers 2 bzw. eine abweichende Verarbeitung, gegebenenfalls auch einfach ein Verwenden des Gewichtskörpers 2 in seiner ursprünglichen Form direkt nach dem Abschneiden, möglich.

Das Befestigungselement 3 ist in diesem Ausführungsbeispiel mit dem Gewichtskörper 2 mittels eines Clinchvorgangs verbunden worden, bei dem mittels der hierzu verwendeten Umformwerkzeuge Stempel und Matrize Material 5 des Gewichtskörpers 2 durch ein hier nicht mehr zu erkennendes Loch im Befestigungselement 3 hindurch gedrückt wird und dieses Loch bzw. diese Öffnung dann randseitig übergreift, so dass ein Hinterschnitt entsteht, der ein Ablösen des Befestigungselements 3 vom Gewichtskörper 2 verhindert. Die Clinchverbindung ist eine form- und kraftschlüssige Verbindung, mit der eine zuverlässige Verbindung unter Einhaltung auch hoher Sicherheitsanforderungen erreicht werden kann.

Das Auswuchtgewicht 1, das hier dargestellt ist, weist einen Gewichtskörper 2 auf, bei dem auch die Längskanten vergleichsweise glatt geschnitten sind. Ein solcher Gewichtskörper 2 kann beispielsweise durch die Verwendung von gespaltenen Stahlbändern als Ausgangsmaterial entstehen.

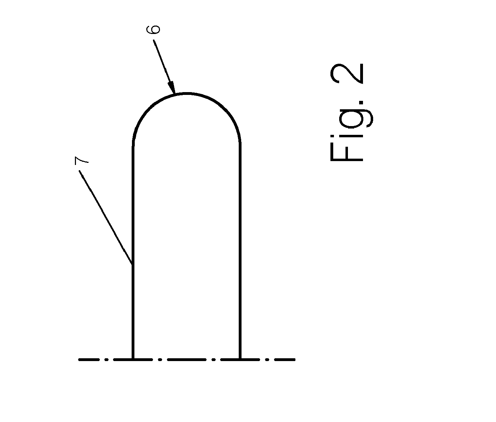

In der Regel ist es jedoch vorteilhaft, wenn als Ausgangsmaterial ein gewalztes Band verwendet wird, das an den Kanten Naturwalzkanten aufweist, wie die in der Figur 2 in einer Querschnittsansicht skizziert dargestellte Naturwalzkante 6. Diese Kanten weisen einen in der Regel zumindest im Wesentlichen halbkreisförmigen Querschnitt auf, meist mit einer mittigen Abflachung, die aber in der Figur 2 nicht gezeigt ist. Wird dementsprechend ein in der Figur 2 teilweise angedeuteter Gewichtskörper 7 geeigneter Länge von einem solchen naturgewalzten Band abgeschnitten, so weist dieser entlang seiner beiden Längskanten eine Naturwalzkante 6 auf, bei der durch ihre runde Form insbesondere das Verletzungsrisiko gesenkt ist.

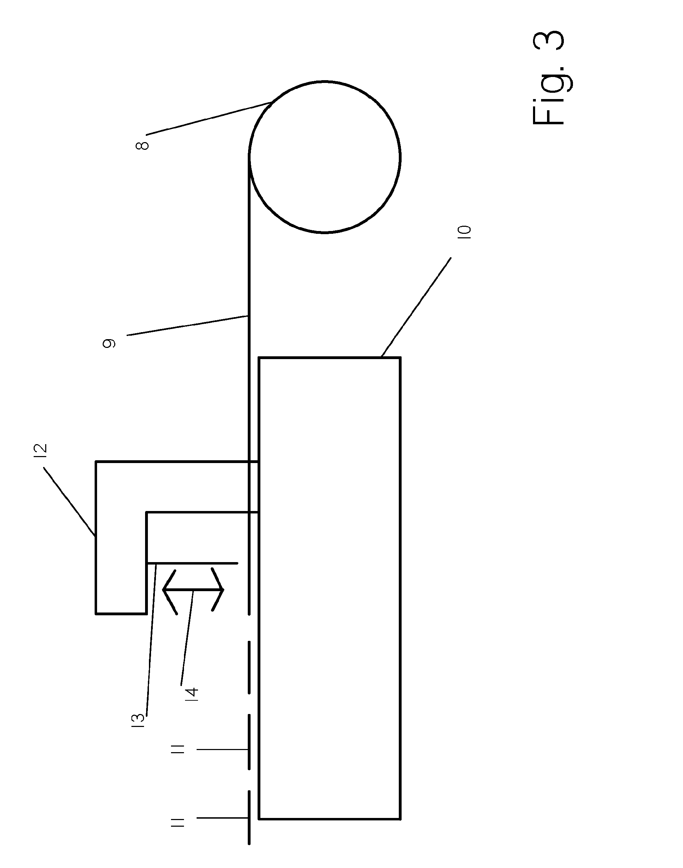

In der Figur 3 ist eine Prinzipdarstellung einer erfindungsgemäßen Herstellung von Gewichtskörpern 11 für ein Auswuchtgewicht gezeigt. Dabei wird als Ausgangsmaterial ein Coilmaterial von einer Rolle 8 abgewickelt, bei dem es sich um ein Stahlband 9 aus ungehärtetem Stahl handelt, das zur Bildung eines Auswuchtgewichts später mit einem Befestigungselement, beispielsweise aus gehärtetem Federstahl, verbunden werden kann.

Das Stahlband 9 wird hier über einen Tisch 10 geführt, auf dem einzelne Gewichtskörper 11, die jeweils die für die Gewichtskörper 11 gewünschte Länge aufweisen, mittels eines Schneidewerkzeugs 12 mit einem Schneidelement 13, das gemäß dem Pfeil 14 nach oben und unten bewegt werden kann, vom Stahlband 9 abgetrennt werden.

Das erfindungsgemäße Herstellungsverfahren bietet dabei den Vorteil, dass Gewichtskörper unterschiedlicher Längen und somit unterschiedlicher Gewichte mit ein- und demselben Werkzeug 12 hergestellt werden können, wobei zudem durch die Wahl eines Stahlbandes 9 in der gewünschten fertigen Breite im Unterschied zu bisher üblichen Stanzverfahren der Materialabfall äußerst gering gehalten wird, da lediglich an der Schnittkante, also entlang der Breite des fertigen Gewichtskörpers 11, ein gewisser Materialabfall in Kauf genommen werden muss. Des Weiteren ist es, zum Beispiel bei einer Produktion im Ausland, von Vorteil, dass das Werkzeug 12 als einfaches Schneidewerkzeug 12 mit dem Schneidelement 13 vergleichsweise einfach bedient und gewartet werden kann.

### Bezugszeichenliste

| | |
|---|---|
| 1 | Auswuchtgewicht |
| 2 | Gewichtskörper |
| 3 | Befestigungselement |
| 4 | Mittellinie |
| 5 | Material |
| 6 | Naturwalzkante |
| 7 | Gewichtskörper |
| 8 | Rolle |
| 9 | Stahlband |
| 10 | Tisch |
| 11 | Gewichtskörper |
| 12 | Schneidewerkzeug |
| 13 | Schneidelement |
| 14 | Pfeil |

## Patentansprüche

1. Verfahren zur Herstellung eines Gewichtskörpers (2, 7, 11) für ein Auswuchtgewicht (1), **dadurch gekennzeichnet, dass** der Gewichtskörper (2, 7, 11) durch Abschneiden eines Streifens einer für den Gewichtskörper (2, 7, 11) gewünschten Länge von einem längeren Blechstreifen, der, zumindest im Wesentlichen, bereits die für den Gewichtskörper (2, 7, 11) vorgesehene Breite aufweist, hergestellt wird.

2. Verfahren nach Anspruch 1, **dadurch gekennzeichnet, dass** der Streifen von einem aufgewickelten Metallband als längerem Blechstreifen abgeschnitten wird, insbesondere von einem Coil und/oder einem Endlosband.

3. Verfahren nach einem der vorangehenden Ansprüche, **dadurch gekennzeichnet, dass** der Streifen von einem Stahlstreifen, insbesondere aus ungehärtetem Stahl, als längerem Blechstreifen abgeschnitten wird.

4. Verfahren nach einem der vorangehenden Ansprüche, **dadurch gekennzeichnet, dass** der Streifen nach dem Abschneiden durch wenigstens einen Biegevorgang in eine gewünschte Form gebracht wird.

5. Verfahren nach Anspruch 4, **dadurch gekennzeichnet, dass** ein Biegevorgang, zumindest im Wesentlichen, bezüglich einer Längsrichtung des Streifens durchgeführt wird.

6. Verfahren nach einem der vorangehenden Ansprüche, **dadurch gekennzeichnet, dass** der Streifen von einem Spaltband oder Walzblech als längerem Blechstreifen abgeschnitten wird.

7. Verfahren nach einem der vorangehenden Ansprüche, **dadurch gekennzeichnet, dass** der Streifen von einem Walzblech als längerem Blechstreifen abgeschnitten wird, das wenigstens eine Naturwalzkante (6) aufweist.

8. Verfahren nach Anspruch 7, **dadurch gekennzeichnet, dass** der Streifen von einem Walzblech als längerem Blechstreifen derart abgeschnitten wird, das wenigstens eine Längskante des Gewichtskörpers (2, 7, 11) durch wenigstens eine an einer langen Kante des Walzblechs vorhandene Naturwalzkante (6) gebildet wird.

9. Gewichtskörper (2, 7, 11) für ein Auswuchtgewicht (1), **dadurch gekennzeichnet, dass** der Gewichtskörper (2, 7, 11) durch Abschneiden eines Streifens einer für den Gewichtskörper (2, 7, 11) gewünschten Länge von einem längeren Blechstreifen, der, zumindest im Wesentlichen, bereits die für den Gewichtskörper (2, 7, 11) vorgesehene Breite aufweist, hergestellt ist.

10. Gewichtskörper (2, 7, 11) nach Anspruch 9, **dadurch gekennzeichnet, dass** der Streifen von einem aufgewickelten Metallband als längerem Blechstreifen abgeschnitten ist, insbesondere von einem Coil und/oder einem Endlosband.

11. Gewichtskörper (2, 7, 11) nach einem der Ansprüche 9 oder 10, **dadurch gekennzeichnet, dass** der Streifen von einem Stahlstreifen (9), insbesondere aus ungehärtetem Stahl, als längerem Blechstreifen abgeschnitten ist.

12. Gewichtskörper (2, 7, 11) nach einem der Ansprüche 9 bis 11, **dadurch gekennzeichnet, dass** in den Gewichtskörper (2, 7, 11) wenigstens eine Biegung zum Erreichen einer gewünschten Form eingebracht ist.

13. Gewichtskörper (2, 7, 11) nach Anspruch 12, **dadurch gekennzeichnet, dass** in den Gewichtskörper (2, 7, 11) wenigstens eine Biegung eingebracht ist, die, zumindest im Wesentlichen, bezüglich einer Längsrichtung verläuft.

14. Gewichtskörper (2, 7, 11) nach einem der Ansprüche 9 bis 13, **dadurch gekennzeichnet, dass** der Streifen von einem Spaltband oder Walzblech als längerem Blechstreifen abgeschnitten ist.

15. Gewichtskörper (2, 7, 11) nach einem der Ansprüche 9 bis 14, **dadurch gekennzeichnet, dass** der Streifen von einem Walzblech als längerem Blechstreifen abgeschnitten ist, das wenigstens eine Naturwalzkante (6) aufweist.

16. Gewichtskörper (2, 7, 11) nach Anspruch 15, **dadurch gekennzeichnet, dass** wenigstens eine Längskante des Gewichtskörpers (2, 7, 11) durch wenigstens eine an einer langen Kante des Walzblechs vorhandene Naturwalzkante (6) gebildet ist.

17. Auswuchtgewicht (1) mit einem Gewichtskörper (2, 7, 11) und einem Befestigungselement (3) zum Befestigen des Auswuchtgewichts (1) an einem auszuwuchtenden Gegenstand, **dadurch gekennzeichnet, dass** der Gewichtskörper (2, 7, 11), der insbesondere ein Gewichtskörper (2, 7, 11) nach einem der Ansprüche 9 bis 16 ist, nach einem Verfahren nach einem der Ansprüche 1 bis 8 hergestellt ist.

18. Auswuchtgewicht (1) nach Anspruch 17, **dadurch gekennzeichnet, dass** der Gewichtskörper (2, 7, 11) und das Befestigungselement (3) durch einen Clinchvorgang miteinander verbunden sind.

19. Werkzeug (12) zur Herstellung eines Gewichtskörpers (2, 7, 11), insbesondere nach einem der Ansprüche 9 bis 16, gemäß einem Verfahren nach einem der Ansprüche1 bis 8.
